Europäisches Patentamt

European Patent Office

Office européen des brevets

(11) Veröffentlichungsnummer: **0 299 145**
A2

# EUROPÄISCHE PATENTANMELDUNG

(21) Anmeldenummer: 88105446.4

(22) Anmeldetag: 06.04.88

(51) Int. Cl.⁴: **A47J 31/057 , A47J 31/56**

(30) Priorität: 11.07.87 DE 3723018

(43) Veröffentlichungstag der Anmeldung:
18.01.89 Patentblatt 89/03

(84) Benannte Vertragsstaaten:
**CH FR GB IT LI NL SE**

(71) Anmelder: **ROBERT KRUPS STIFTUNG & CO. KG.**
**Heresbachstrasse 29**
**D-5650 Solingen 19(DE)**

(72) Erfinder: **Hoffmann, Erich**
**Katterbachstrasse 38**
**D-5060 Bergisch-Gladbach 2(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) Elektrisch betriebenes Gerät zur Herstellung von Tee.

(57) Es handelt sich um ein elektrisch betriebenes Gerät zur Herstellung von Tee mit einem Frischwasserbehälter, der im Bereich seines Bodens eine elektrische Heizeinrichtung aufweist und bis auf eine verschließbare Einfüllöffnung für das Wasser allseitig geschlossen ist. Im Inneren des Frischwasserbehälters ist ein Steigrohr angeordnet, dessen Einlaß in Nähe des Bodens und dessen Auslaß in einem Ziehbehälter liegt. Der Ziehbehälter hat seinerseits einen Aufnahmebehälter für Teeblätter, Teebeutel od.dgl. sowie eine einstellbare Verschluß- und Öffnungseinrichtung für den fertig zubereiteten Tee. Unterhalb des Ziehbehälters ist ein Aufffangbehälter angeordnet, der auf einer beheizbaren Warmhalteplatte ruht. Die elektrisch betriebene Heizung des Frischwasserbehälters ist als Dickschichtheizer ausgebildet, der im unteren Bereich des Frischwasserbehälters liegt und einen Tragkörper aus isolierendem Werkstoff umfaßt, auf dessen Außenseite Dickschicht leiterbahnen angeordnet sind. Die Dickschichtleiterbahnen können sowohl einem besonderen Tragkörper aus isolierendem Werkstoff, wie Keramik, aufgetragen werden, um dann mit dem Frischwasser behälter verbunden zu werden. Daneben ist es aber auch möglich, die Dickschichtleiterbahnen unmittelbar auf einer der Wandungen des Frischwasserbehälters aufzubrin-gen, beispielsweise aufzudrucken, sofern der Frischwasserbehälter aus einem elektrisch isolierender Werkstoff hergestellt ist.

FIG.1

## Elektrisch betriebenes Gerät zur Herstellung von Tee

Die Erfindung bezieht sich auf ein elektrisch betriebenes Gerät zur Herstellung von Tee mit einem Frischwasserbehälter, der im Bereich seines Bodens eine elektrische Heizeinrichtung aufweist und bis auf eine verschließbare Einfüllöffnung für das Wasser allseitig geschlossen ist und im Inneren ein Steigrohr aufweist, dessen Einlaß in Nähe des Bodens und dessen Auslaß in einem Ziehbehälter liegt, der einem Aufnahmebehälter für den Tee und eine einstellbare Verschluß- und Öffnungseinrichtung für den fertig zubereiteten Tee aufweist, wobei unterhalb des Ziehbehälters ein Auffangbehälter angeordnet ist, der auf einer beheizbaren Warmhalteplatte ruht.

Durch die DE-OS 2 428 165 ist ein Haushaltgerät dieser Art bekanntgeworden, mit dem außer Kaffee auch Tee zubereitet werden kann. Dabei ist der Aufnahmebehälter für Frischwasser druckfest ausgebildet und hat im Bereich seines Bodens eine elektrische Heizeinrichtung, die im Wasser selbst liegt. Oberhalb des Frischwasserbehälters befindet sich ein aromadicht verschließbares Brühgefäß, das einen ersten Aufnahmeraum für das Brühwasser und einen Zweiten Aufnahmeraum für das Kaffeepulver od.dgl. aufweist. Am Boden des ersten Aufnahmeraumes ist eine Sperrvorrichtung in Form eines Magnetventiles angebracht, die das fertige Getränk zunächst am Abfluß hindert. Der Aufnahmebehälter für das Frischwasser und der Ziehbehälter bzw. die Brühvorrichtung sind durch ein Steigrohr miteinander verbunden. Die eine Öffnung dieses Steigrohres liegt im Bereich des Bodens des Frischwasserbehälters und damit im Bereich der dort angeordneten elektrischen Heizung. Das Steigrohr durchdringt den Boden des Ziehbehälters, der bereichsweise zugleich den Deckel für den Frischwasserbehälter bildet. Das obere Ende des Steigrohres ist im Ziehbehälter angeordnet und zwar in Nähe des abnehmbaren Deckels desselben. Beim bestimmungsgemäßen Gebrauch dieses bekannten Haushaltgerätes wird mittels der elektrischen Heizeinrichtung das Frischwasser in dem Aufnahmebehälter zum Kochen gebracht. Das kochende Wasser wird durch Eigendruck aus dem Frischwasserbehälter durch das Steigrohr in den oberhalb des Frischwasserbehälters liegenden Ziehbehälter gefördert und kommt mit dem dort vorhandenen Kaffeemehl oder gegebenenfalls mit dem Tee in Wirkverbindung. Das Einwirken des heißen Wassers auf das Kaffeemehl oder den Tee erfolgt so lange, wie es der Benutzer wünscht. Zu diesem Zweck ist eine Zeitschaltuhr vorgesehen. Nach Ablauf der eingestellten Zeit wird ein Magnetventil im Boden des Ziehbehälters geöffnet. Dadurch kann das fertig zubereitete Getränk in eine darunter befindliche Aufnahmekanne od.dgl. abfliessen. Bei dieser bekannten Ausführungsform ist ein sehr lang bemessenes Steigrohr erforderlich, das vom Boden des Frischwasserbehälters bis in Nähe des Deckels des Ziehbehälters reicht. Das Steigrohr ist ortsfest im Deckel des Frischwasserbehälters bzw. im Boden des Ziehbehälters angeordnet. Eine Verschiebung desselben oder eine Längenänderung ist nicht möglich. Nachteilig bei dieser bekannten Ausführungsform eines Haushaltgerätes zum Zubereiten von heißen Getränken, wie Kaffee oder Tee ist auch, daß eine normale elektrische Widerstandsheizung benutzt wird, die darüber hinaus noch im Inneren des Frischwasserbehälters angeordnet ist. Daher sind besondere Vorkehrungen zu treffen, um die im Frischwasserbehälter angeordneten elektrischen Einrichtungen vor dem Einfluß des Wassers zu schützen.

Durch die DE-PS 686 482 ist eine Vorrichtung zum Herstellen heißer Getränke, wie Kaffee, Tee od.dgl. bekanntgeworden. Bei dieser bekannten Vorrichtung sind drei Gefäße übereinander angeordnet und zwar ein Heißwasserbereiter mit einem außenliegenden Heißgürtel, einem Heizmittelschalter und einem Ablaßventil. Darunter liegt ein Brühbehälter mit einem durch ein Ablaßventil absperrbaren Filter und darunter schließlich ist ein Auffang- oder Ausschankbehälter angeorddnet. Durch die Verwendung von drei übereinander angeordneten Gefäßen ergibt sich eine sehr große Bauhöhe für diese bekannte Vorrichtung zum Herstellen heißer Getränke, wie Kaffee, Tee od.dgl. Darüber hinaus ist jedem der beiden oberen Behälter eine eigene steuerbare Ablaßeinrichtung zugeordnet, durch die die Herstellung derartiger Vorrichtungen erheblich verteuert wird, zumal dazu noch Zeitschalter od.dgl. hinzukommen.

Die benutzte Heizung zum Erwärmen des Frischwassers ist nicht nur aufwendig sondern hat auch einen schlechten Wirkungsgrad, weil sie an der Außenfläche des oberen Behälters liegt und daher die wärme nur sehr schlecht an das Wasser im Inneren des Behälters weitergibt.

Eine wesentlich verbesserte Ausführungsform einer aus drei übereinander angeordneten Gefäßen bestehenden Vorrichtung zum Bereiten von Tee ist durch die DE-PS 3 312 354 bekanntgeworden. Dieses Haushaltgerät hat einen eine Heizeinrichtung aufweisenden und mit einem Deckel versehenen Wasserbehälter, der einen über einen Ziehbehälter mündenden, mit einer steuerbaren Ablaßeinrichtung versehenen Auslauf aufweist. Der das Brühgut aufnehmende Ziehbehälter hat ebenfalls einen Abfluß, aus welchem die Brühflüssigkeit in einen unterhalb des Ziehbehälters angeordneten Getränkesammelbehälter abfließt. Dabei ist die Ablaßeinrichtung von einem Saughebersteigrohr gebildet und der Abfluß des Ziehbehälters ist mit einem ein zeitabhängig offensteuerbaren Ventilglied verschlossen. Auch dieses bekannte Haushaltgerät zum Bereiten von Tee hat noch eine beachtliche Bauhöhe, weil wiederum brei übereinander angeordnete Behälter mit steuerbaren Ablaßeinrichtungen vorhanden sind. Diese Steuereinrichtungen sind verhältismäßig teuer, weil in aller Regel zur Steuerung des Ventilgliedes eine elektronisch regelbare Steuereinheit vorgesehen ist. Darüber hinaus wird bei diesem bekannten Gerät eine normale elektrische Widerstandsheizung benutzt.

Der Erfindung liegt die Aufgabe zugrunde, Haushaltgeräte zum Bereiten von Tee der eingangs näher gekennzeichneten Art weiter zu verbessern, insbesondere derart, daß die Heizeinrichtung wesentlich wirtschaftlicher als bisher arbeitet und dabei eine Ausbildung erhält, durch welche die Bauhöhe im Vergleich mit dem Bekannten erheblich reduziert wird. Die Heizeinrichtungen sollen dabei so beschaffen sein, daß sie sicht nur in wirtschaftlich wohlfeiler Weise hergestellt sondern auch in ebensolcher Weise mit dem Frischwasserbehälter verbunden werden können. Dabei soll auch eine Anpassung der aufzuwendenden elektrischen Energie an die Menge des herzustellenden heißen Wassers erfolgen.

Zur Lösung dieser Aufgabe wird vorgeschlagen, die elektrisch betriebene Heizung des Frischwasserbehälters als Dickschichtheizer auszubilden, der im unteren Bereich des Frischwasserbehälters liegt und einen Tragkörper aus einem isolierenden Werkstoff umfaßt, auf dessen Außenseite Dickschichtleiterbahnen angeordnet sind. Das erfindungsgemäß ausgebildete elektrisch betriebene Haushaltgerät hat gegenüber dem Bekannten erhebliche Vorteile. Zunächst wird auf die Verwendung der bisherigen Widerstandsheizungen verzichtet, die hinsichtlich ihres Wirkungsgrades unwirtschaftlich sind. Stattdessen wird ein Dickschichtheizer eingesetzt, der sich zunächst im Vergleich mit den bekannten Heizeinrichtungen wohlfeil herstellen läßt und der die Möglichkeit einer Anpassung der aufzuwendenden Energie für die Herstellung unterschiedlicher Mengen von Heißwasser zuläßt. Dabei ist insbesondere an die Verwendung eines sich selbst regelnden PTC-Heizelementes gedacht, also eines solchen mit einem positiven Temperaturkoeffizienten. Bevorzugt wird eine Verwendung von pastenfürmigen Dickschichten, die auf einen Tragkörper aufgebracht werden, so daß einfache Herstellungsverfahren eingesetzt werden können. Als Werkstoffe für einen Tragkörper kommen Glas, Steatit, emaillierter Stahl od. dgl. in Betracht, als Pastenbestandteil für die elektrische Funktion der Dickschicht neben einem Bindemittel aus Glas oder Oxyden und einem Druckträger aus organischen Stoffe verschiedene Werkstoffe, wie Platin, Gold, Wismut, Ruthenate oder Ruthinium-Oxyde. Vor allem lassen sich Heizkörper bilden, bei denen der Tragkörper als Aluminiumoxydplatte ausgebildet ist, auf den die Leiterbahnen in Form einer Silber-Palladium-Dickschicht aufgetragen sind.

Hinsichtlich der Ausbildung der Dickschichtheizer und ihrer Einzelteile ergeben sich mehrere Möglichkeiten. Nach einem ersten Vorschlag der Erfindung ist der Dickschichtheizer als plattenförmiger Tragkörper aus einem elektrisch isolierenden Werkstoff, wie Keramik, Kunststoff od.dgl. ausgebildet, der an der Außenseite des Bodens des Frischwasserbehälters liegt und auf dessen Außenseite pastenförmige Dickschichtleiterbahnen aufgebracht sind. Bei dieser Ausbildung kommt der Dickschichtheizer somit überhaupt nicht mit dem Wasser des Frischwasserbehälters in Wirkverbindung, weil er an der Außenseite des Behälters und zwar bevorzugt an der Unterseite des Bodens liegt.

Es empfiehlt sich, den Dickschichtheizer an der Außenseite des metallischen Unterteils des Frischwasserbehälters zu befestigen, während der Oberteil des Frischwasserbehälters aus einem durchsichtigen Werkstoff gefertigt ist und wenigstens auf seiner einen Wandung eine Skala aufweist. Bei dieser Ausführungsform wird für die Herstellung des Unterteils Frischwasserbehälters bewußt ein metallischer Werkstoff, z. B. Aluminium, benutzt, weil auf diese Weise eine sehr gute Wärmeübertragung zwischen dem Dichschichtheizer und dem metallischen Unterteil des Frischwasserbehälters erfolgt, wobei diese Wärme dann an das Wasser weitergegeben wird. Die Verwendung eines durchsichtigen Werkstoffes bei der Herstellung des Oberteils hat für den Benutzer den Vorteil, daß er sich jederzeit darüber informieren kann, wie viel Wasser sich im Frischwasserbehälter befindet. Die an den Wandungen vorgesehene Skala erleichtert ihm dabei das Überprüfen der vorhandenen Wassermenge.

Bei dieser Ausführungsform des Frischwasserbehälters, bei dem unterschiedliche Werkstoffe für die Fertigung des Ober- und Unterteiles eingesetzt werden, empfiehlt es sich, die beiden Teile unter Zwischenschaltung einer Dichtung, beispielsweise einer Silikondichtung, miteinander zu verbinden. Dabei ist ein derartiger Frischwasserbehälter auf einem Halteflansch des Gerätegehäuses gelagert. Ein solcher Halteflansch kann den Innenwandungen des Gehäuses direkt angeformt sein.

Nach einem weiteren Vorschlag der Erfindung ist der Frischwasserbehälter selbst aus einem elektrisch isolierenden Werkstoff hergestellt und die Dickschichtleiterbahnen sind unmittelbar auf einer der Wandungen eines solchen Frischwasserbehälters angebracht. Durch diese Ausbildung des Frischwasserbehälters und der zugeordneten Heizung verbilligt sich die Herstellung des Haushaltgerätes zum Herstellen von Tee erheblich. Es kann nämlich auf die Verwendung eines zusätzlichen Tragkörpers für die Dickschichtleiterbahnen verzichtet werden. Stattdessen erfolgt der Auftrag der Dickschichtleiterbahnen direkt auf eine der Wandungen des aus einem elektrisch isolierenden Werkstoff gefertigten Frischwasserbehälters. Dabei kann sowohl die Außenseite des Bodens als auch die benachbarten Seitenwandungen zum Auftragen der Dickschichtleiterbahnen herangezogen werden. Durch das unmittelbare Auftragen der Dickschichtleiterbahnen auf eine der Wandungen des Frischwwasserbehälters kommen auch die bisher erforderlichen Verbindungsmittel in Fortfall, die erforderlich waren, um den Tragkörper des Dickschichtheizers mit den Außenwandungen des Frischwasserbehälters zu verbinden.

Nach einem weiteren Vorschlag der Erfindung sind auf einem einem Tragkörper aus elektrisch isolierendem Werkstoff eine Mehrzahl von Dickschichtleiterbahnen aufgebracht, die einzeln oder gruppenweise benutzbar sind. Eine solche Maßnahme läßt sich sowohl verwenden, wenn separat hergestellte Tragkörper benutzt werden als auch dann, wenn dieses Dickschichtleiterbahnen direkt auf der Außenwandung des Frischwasserbehälters angebracht werden.

Es Empfiehlt sich, die Dickschichtleiterbahnen unterschiedlich breit zu halten bzw. unterschiedliche Widerstandswerte aufweisen zu lassen, wobei der Widerstandswert umgekehrt proportional zur Breite der Widerstandsbahn ist. Derartige Dickschichtleiterbahnen lassen sich in sehr unterschiedlicher geometrischer Anordnung auf einem Tragkörper anbringen, sei es nun auf einem nachträglich zu befestigenden Tragkörper oder sei es direkt auf der Außenseite einer Wandung des Frischwasserbehälters. Neben geradlinig bzw. eckig verlaufenden Dickschichtleiterbahnen kommen auch gekrümmt verlaufende, z. B. kreis- oder ellipsenförmige Leiterbahnen zur Anwendung. Hinsichtlich der Ausbildung und Anordnung des Steigrohres sind erfindungsgemäß unterschiedliche Lösungen möglich. Nach einem ersten Vorschlag der Erfindung wird eine feste Anordnung des Steigrohres im Gehäuse gewählt, d.h. der Einlaß eines solchen Steigrohres verbleibt immer im gleichen Abstand zur benachbarten Bodenfläche des Frischwasserbehälters.

Nach einem anderen Vorschlag der Erfindung ist jedoch die wirksame Länge des Steigrohres im Frischwasserbehälter derart veränderbar, daß der Einlaß des Steigrohres unterschiedliche Abstände zum Boden des Frischwasserbehälters einnimmt. Eine solche Lösung kann man beispielsweise dann verwenden, wenn eine Lageveränderung des Steigrohres im Gehäuse möglich ist. Sollte dabei eine obere Abdeckung einer derartigen Verschiebung des Steigrohres im Wege stehen, so kann entweder diese Abdeckung vorher entfernt werden oder aber es lassen sich Durchbrüche in der Abdeckung anbringen, durch die Bereiche des Steigrohres beim Einstellen der wirksamen Länge herausragen. In Abhängigkeit von dem Abstand des Einlasses des Steigrohres im Bezug auf den Boden des Frischwasserbehälters ist die verbleibende Restmenge des Frischwassers im Frischwasserbehälter unterschiedlich.

Bei einer anderen Ausführungsform der Erfindung wird das Steigrohr als Teleskoprohr ausgebildet. Bei einem derartigen Teleskoprohr kann durch bekanntes Ineinanderschieben der unterschiedlichen Durchmesser aufweisenden Rohrteile eine unterschiedliche wirksame Länge eingestellt werden.

Auf der Zeichnung ist die Erfindung in mehreren Ausführungsbeispielen dargestellt und zwar zeigen:

Fig. 1 ein erfindungsgemäß ausgebildetes, elektrisch betriebenes Gerät zur Herstellung von Tee, teilweise im Längsschnitt, teilweise in Ansicht,

Fig. 2 in Draufsicht eine erste Ausführungsform eines Dickschichtheizers,

Fig. 3 ebenfalls in Draufsicht eine zweite Ausführungsform eines Dickschichtheizers und

Fig . 4 ebenfalls in Draufsicht eine dritte Ausführungsform eines Dickschichtheizers mit an den Enden der Dickschichtleiterbahnen angeordneten Auschlußleitungen.

Es sei zunächst erwähnt, daß in den Figuren der Zeichnungen nur diejenigen Teile eines elektrisch betriebenen Gerätes zum Zubereiten von Tee dargestellt sind, welche für das Verständnis der Erfindung Bedeutung haben. So fehlen in den Figuren der Zeichnungen insbesondere die Steuer- und Regeleinrichtungen und die elektrischen Zuleitungen. Alle nicht dargestellten Teile können eine an sich bekannte Ausbildung haben und in ebenfalls an sich bekannter Weise in dem Gehäuse oder am Gehäuse des Gerätes untergebracht bzw. angebracht werden.

Das dem Ausführungsbeispiel zugrunde gelegte Haushaltgerät 10 - im nachfolgenden kurz Teeautomat genannt - hat ein Gerätegehäuse 11, das aus einem elektrisch isolierenden Werkstoff gefertigt ist. Das Gerätegehäuse 11 besteht im wesentlichen aus einem hohlen aufrechten Gehäuseteil 12 und einem waagerecht dazu angeordneten, ebenfalls hohlen Fuß- oder Aufstellteil 13. Der Fußteil hat an seiner Unterseite vorzugsweise Aufstellfüße oder Aufstellplatten, mit denen ein unmittelbares Aufstellen des Teeautomaten 10 auf einer Aufstellfläche, wie einem Tisch od.dgl. möglich ist. Im oberen Bereich des aufrechten Gehäuseteiles 12 ist ein generell mit 15 bezeichneter Frischwasserbehälter untergebracht, der im dargestellten Ausführungsbeispiel aus zwei Teilen, nämlich einem Unterteil 19 und einem nicht näher bezeichneten Oberteil besteht. Dabei ist im dargestellten Ausführungsbeispiel der Unterteil 19 aus metallischem Werkstoff, beispielsweise aus Aluminium gefertigt. Er hat einen umlaufenden Flansch mit einer nutenartigen Vertiefung, in die unter Zwischenschaltung einer Dichtung, wie einer Silikondichtung, der untere Rand des Oberteiles des Frischwasserbehälters 15 eingreift. Auf diese Weise werden die beiden Teile des Frischwasserbehälters fest miteinander verbunden. Im Gegensatz zum Unterteil 19 ist der Oberteil des Frischwasserbehälters 15 aus einem glasklaren, also durchsichtigen Werkstoff gefertigt. An seiner einen Wandung ist eine Skala 40 angeordnet. Diese Skala gibt beispielswiese die Tassenanzahl an. Im Bereich der oberen Decke hat der Frischwasserbehälter eine Öffnung 18, die durch einen Verschluß 17 verschlossen werden kann. Nach Entfernen des Verschlusses 17 kann der Frischwasserbehälter 15 gefüllt werden, wobei vorher noch eine Abdeckung 14 zu entfernen ist, die das Gehäuse 12 nach oben hin abdeckt. Nach dem Anbringen des Verschlusses 17 liegt ein druckdichter Frischwasserbehälter 15 vor. Dabei ist allerdings ein Sicherheitsauslaß vorgesehen, der das Entstehen eines zu großen Druckes im Innenraum des Frischwasserbehälters ausschließt. Vorzugsweise ist der Verschlußstopfen 17 mit einem nicht dargestellten Durchlaß versehen, durch den ein Austreten von Wasserdampf möglich ist.

Zu dem Teeautomaten 10 gehört auch ein generell mit 16 bezeichnetes Steigrohr, das z. B. als Aluminiumrohr ausgebildet sein kann. Der größte Teil dieses Steigrohres liegt im Inneren des Frischwasserbehälters 15. Der obere Teil des Steigrohres ist dagegen aus dem Frischwasserbehälter 15 herausgeführt, verläuft parallel zur oberen Abdeckung 14 und ist dann wieder in Richtung Gehäusefuß 13 zurückgeführt, derart, daß dieser zurückgeführte Teil durch einen Durchlaß 25 eines Deckels 24 des Ziehbehälters 23 hindurchragt. Der Auslaß des Steigrohres 22 liegt somit innerhalb des Ziehbehälters 23. Bei der zeichnerisch dargestellten Ausführungsform hat das Steigrohr eine konstante Lage, d.h. der Abstand des Auslasses 21 zum Boden des Frichwasserbehälters ändert sich nicht.

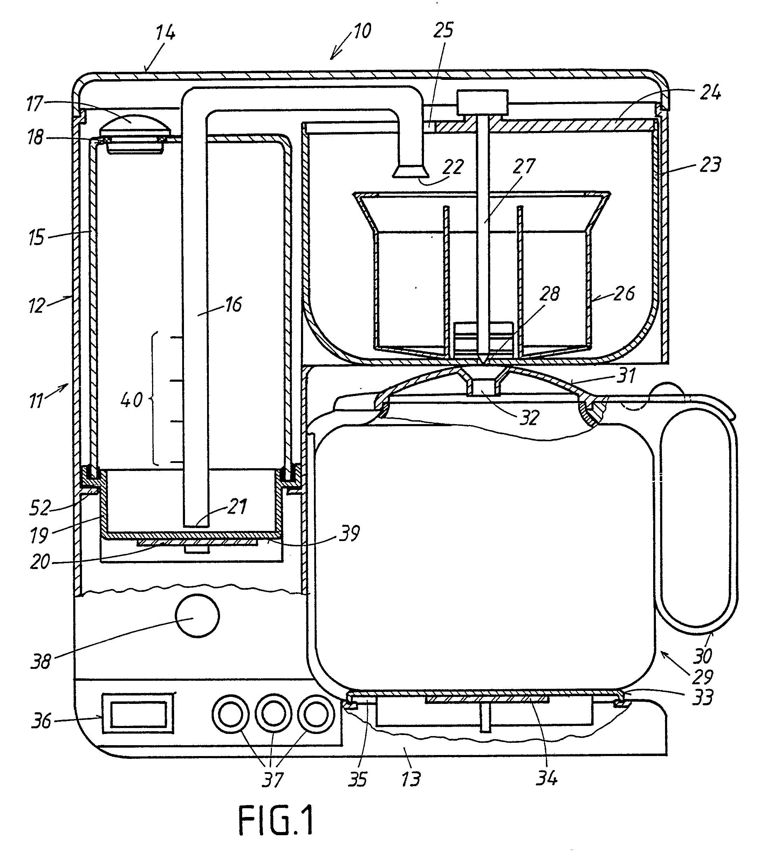

Um das in Frischwasserbehälter 15 befindliche Wasser wirtschaftlich aufheizen zu können, ist erfindungsgemäß ein generell mit 20 bezeichneter Dickschichtheizer vorgesehen, der - vergl. dazu die Fig. 1 der Zeichnung - im gewählten Ausführungsbeispiel unterhalb des Bodens 39 des Unterteils 19 angebracht ist. Der Dickschichtheizer 20 kann mit dem Boden 39 mittels bekannter Verbindungselemente verbunden werden, beispielsweise durch Aufkleben.

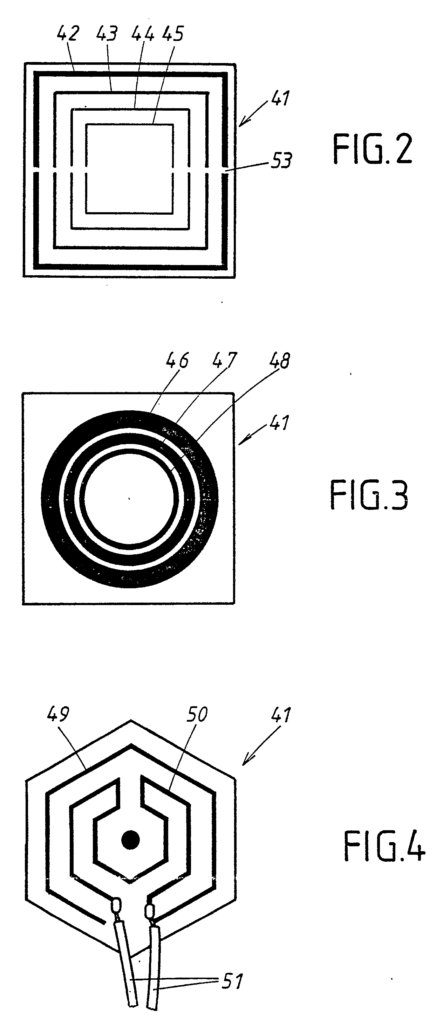

Der Dickschichtheizer 20 kann unterschiedliche Ausbildung erhalten. In den Fig. 2 bis 4 der Zeichnung sind drei Möglichkeiten wiedergegeben. Daraus ergibt sich, daß gemäß Fig. 2 der Zeichnung der Dickschichtheizer 20 aus einem plattenförmigen Tragkörper 41 besteht, der aus einem elektrisch isolierenden Werkstoff, beispielsweise aus Keramik, gefertigt ist. Auf seiner Oberseite hat der Tragkörper eine Vielzahl von Dickschichtleiterbahnen 42 bis 45. Im gewählten Ausführungsbeispiel haben die Dickschichtleiterbahnen 42 bis 45 jeweils U-förmige Gestalt. Sie sind mit Abstand ineinandergeschachtelt, und es sind zwei gleichgestaltete Gruppen von Dickschichtleiterbahnen vorhanden, nämlich eine obere und eine untere, die im dargestellten Ausführungsbeispiel voneinander getrennt sind, was durch jeweils einen Spalt 53 zwischen den aufeinanderzuzeigenden Enden der Dickschichtleiterbahnen angedeutet ist. Gemäß dem Ausführungsbeispiel nach der Fig. 2 der Zeichnung hat die Dickschichtleiterbahn 42 die größte Breite, die innenliegende Dickschichtleiterbahn 45 dagegen die kleinste. Dies bedeutet, daß die Dickschichtleiterbahn 42 einen geringeren Widerstand als die Dickschichtleiterbahn 45 hat. Es sei erwähnt, daß die Dickschichtleiterbahnen 42 bis 45 in unterschiedlicher Weise benutzt werden können. Es ist sowohl eine Einzelbenutzung der Dickschichtleiterbahnen möglich als auch eine gruppenweise, wobei im Extremfall zwei Gruppen von Dickschichtleiterbahnen gebildet werden können, deren Enden dann mit einer Anschlußleitung in bekannter Weise verbunden werden. Auf diese Weise wird dem Benutzer die Möglichkeit gegeben, eine Anpassung der zum Aufheizen der Frischwassermenge erforderlichen elektrischen Energie an die jeweiligen Verhältnisse durchzuführen. Die Dickschichtleiterbahnen 42 bis 45 können im übrigen in an sich bekannter Weise aus pastenförmigen Ausgangswerkstoffen hergestellt werden. Daher erübrigen sich nähere Angaben über die Zusammensetzung der Pasten und über das dabei benutzte Verfahren.

Die Ausführungsform des Dickschichtheizers nach der Fig. 3 der Zeichnung geht wiederum von einem plattenförmigen Tragkörper 41 aus einem elektrisch isolierenden Werkstoff aus, nur sind in diesem Falle die Dickschichtleiterbahnen 46, 47 und 48 in Form von in sich geschlossenen Kreisen aufgebracht, wobei diese Kreise um den Mittelpunkt des Tragkörpers 41 herum liegen. Auch in diesem Falle hat die außenliegende Dickschichtleiterbahn 46 die größte Breite, die innenliegende 48 dagegen die geringste.

Bei dem Ausführungsbeispiel nach der Fig. 4 der Zeichnung ist nunmehr kein quadratischer sondern ein sechseckförmiger Tragkörper 41 benutzt, der jedoch wiederum aus Keramik oder einem ähnlichen Werkstoff gefertigt ist. In diesem Falle sind zwei Dickschichtleiterbahnen 49 und 50 vorhanden, deren Enden mit den Anschlußleitungen 51 in bekannter Weise verbunden sind. Eine dieser Dickschichtheizer 20 gemäß den Fig. 2 bis 4 der Zeichnung kann am Boden 39 des Frischwasserbehälters 15 mit bekannten Befestigungsmitteln angebracht sein.

Wie aus der Fig. 1 der Zeichnung ersichtlich, ist der Ziehbehälter 23 seitlich neben dem Oberteil des Frischwasserbehälters 15 angebracht und zwar derart, daß die Abdeckung 14 sowohl den Frischwasserbehälter als auch den horizontalen Teil des Steigrohres erfaßt. Im Inneren des Frischwasserbehälters 15 ist ein Aufnahmebehälter 26 für Teeblätter, Teebeutel od.dgl. vorgesehen. Dieser Aufnahmebehälter 26 ist in der Mitte des Ziehbehälters 23 liegend angeordnet. Er stützt sich auf der Innenwand des Bodens des Ziehbehälters ab. Im übrigen kann der Aufnahmebehälter 26 eine bekannte Ausbildung und Gestaltung erhalten. Er wird zweckmäßig aus herstellungstechnischen Gründen einstückig aus einem Kunststoff gefertigt, wobei die Auswahl des Werkstoffes so getroffen wird, daß keine Aromabeeinträchtigung des zuzubereitenden Tees erfolgt. An den Innenwandungen des Aufnahmebehälters 26 können vorstehende Rippen vorhanden sein, die für ein Umspülen der Teeblätter Sorge tragen, indem sie die Teeblätter von den Innenwandungen des Aufnahmebehälters 26 fernhalten.

In der Mitte des Bodens des Ziehbehälters 23 liegend ist ein Auslaß 28 vorgesehen, dem eine generell mit 27 bezeichnete Verschluß- und Öffnungseinrichtung zugeordnet ist. Diese Verschluß- und Öffnungseinrichtung 27 ist in der Fig. 1 nur schematisch wiedergegeben. Dies deshalb, weil hierfür unterschiedlich gestaltete, an sich bekannte Ausführungsformen benutzt werden können. Es kann sich dabei sowohl um eine manuell zu bedienende Verschluß- und Öffnungseinrichtung als auch um eine solche handeln, die mit einer Zeitschaltuhr zusammenarbeitet. Auf alle Fälle hat der Benutzer die Möglichkeit, die Verschluß- und Öffnungseinrichtung 27 so lange in der Sperrlage zu belassen, als es für das Ziehen des Tees erforderlich ist. Nach Ablauf der Zeit kann dann entweder von Hand aus oder über das Zeitschaltwerk das Anheben der Verschluß- und Öffnungseinrichtung 27 erfolgen, so daß der Auslaß 28 freigegeben wird. Der fertig zubereitete Tee gelangt dann durch den Durchlaß 32 eines Deckels 31 in einen Auffangbehälter 29, wobei der Deckel 31 die obere Öffnung des Auffangbehälters abdeckt, der darüber hinaus noch zur besseren Bedienung mit einem Handgriff 30 versehen ist. Auf der gegenüberliegenden, anderen Seite hat der zweckmäßig aus einem durchsichtigen, also glasklaren Werkstoff gefertigte Auffangbehälter 29 eine Ausgießschnaupe.

Wie die Fig. 1 erkennen läßt, ruht der Boden des Auffangbehälters 29 auf einer Warmhalteplatte 33, an deren dem Fußteil 13 zugekehrten Wandung ein zweiter Dickschichtheizer 34 angeordnet ist. Dieser ist jedoch wesentlich kleiner dimensioniert als der erste Dickschichtheizer 20, weil der Dickschichtheizer 34 lediglich die Aufgabe hat, den im Auffangbehälter 29 befindlichen Tee warmzuhalten.

An der Außenseite des Gehäuses 1 sind noch verschiedene Bedienungs- und Kontrolleinrichtungen angeordnet. Diese sind in der Fig. 1 jeweils nur schematisch dargestellt. So geben die Bezugszeichen 39 Kontrolleuchten wieder, die dem Benutzer anzeigen, welche Einrichtung jeweils ein- oder ausgeschaltet ist. Mit 38 ist ein Ein- und Ausschalter für die Stromversorgung wiedergegeben und mit 36 eine grundsätzlich bekannte Uhr. Über diese Uhr kann z. B. eine Beeinflussung der Funktionen des elektrisch betriebenen Haushaltgerätes erfolgen.

Nachzutragen bleibt noch, daß die Warmhalteplatte 33 unter Zwischenschaltung eines Silikonringes 35 mit den Begrenzungswandungen einer Öffnung im Aufstellfuß 13 zusammenwirkt.

Während im Ausführungsbeispiel nach der Fig. 1 der Zeichnung vorgesehen ist, den Frischwasserbehälter 15 aus zwei Werkstoffen zu fertigen, nämlich aus einem metallischen Unterteil 19 und aus einem glasklaren Oberteil, um diese dann miteinander zu verbinden, ist es auch möglich, zur Herstellung des Frischwasserbehälters, einen einzigen, nämlich einen elektrisch isolierenden Werkstoff zu benutzen. Bei einer solchen Gestaltung des Frischwasserbehälters 15 ergibt sich die Möglichkeit, auf die Herstellung eines solchen Dickschichtheizers zu verzichten, der in einem nachträglichen Arbeitsgang mit dem Frischwasserbehälter verbunden werden muß. Vielmehr können die Dickschichtleiterbahnen unmittelbar auf eine der Wandungen eines solchen Frischwasserbehälters aufgebracht, z. B. aufgedruckt werden. Dabei kommen vor allem Bereiche des Bodens 39 und der benachbarten Seitenwandungen eines solchen Frischwasserbehälters zum Aufdrucken der Dickschichtleiterbahnen infrage. Auf diese Weise ist eine äußerst wirtschaftliche Herstellung nicht nur des Frischwasserbehälters sondern auch des zugeordneten Heizers zum Erwärmen des Wassers möglich, nicht zuletzt weil auf zusätzliche Verbindungsmittel zwischen dem Dickschichtheizer und dem Frischwasserbehälter völlig verzichtet werden kann.

Im Ausführungsbeispiel nach der Fig. 1 der Zeichnung ist eine ortsfeste Lage des Steigrohres 16 im Teeautomaten 10 vorgesehen. In Abwandlung dieser Ausführungsform ist es nach einem anderen Vorschlag der Erfindung möglich, die wirksame Länge des Steigrohres 16 im Frischwasserbehälter 15 derart zu verändern, daß der Einlaß 21 des Steigrohres 16 unterschiedliche Abstände zum Boden 39 Des Frischwasserbehälters 15 einnimmt. Dabei besteht die Möglichkeit, das Steigrohr mit solchen Einrichtungen zusammenwirken zu lassen, die das Anbringen des Steigrohres in unterschiedlichen Lagen im Bezug auf den Boden 39 des Frischwasserbehälters 15 zulassen. Gedacht ist dabei an die Verwendung von Klemm- und Halteeinrichtungen. Daneben ist es aber auch möglich, das Steigrohr als Teleskoprohr auszubilden. In diesem Falle kann durch Ineinanderschieben oder Herausziehen der Teleskoprohrabschnitte die wirksame Länge des Steigrohres verändert werden. Ändert sich der Abstand des Einlasses 21 des Steigrohres 16 vom Boden 39 des Frischwasserbehälters 15, so ändert sich damit die im Frischwasserbehälter verbleibende Restmenge.

Wie bereits erwähnt, sind die dargestellten Ausführungen nur beispielsweise Verwirklichungen der Erfindung. Diese ist nicht darauf beschänkt. Vielmehr sind noch mancherlei andere Ausführungen und Anwendungen möglich. Dies gilt insbesondere für die Ausbildung und Gestalt der Dickschichtheizer 20 bzw. 34. Dabei ist es möglich, sowohl dem Tragkörper aus isolierenden Werkstoff als auch den darauf aufzubringenden Dickschichtleiterbahnen eine andere als die dargestellten Ausführungsformen aufweisen zu lassen. Dies gilt auch für die Anzahl der auf ein und demselben Tragkörper 41 anzubringenden Leiterbahnen. Und schließlich ist es möglich, die Erfindung auch bei anderen an sich bekannten Teeautomaten einzusetzen.

Bezugszeichenliste :

10 - Haushaltgerät (Teeautomat)
11 - Gerätegehäuse
12 - aufrechter Gehäuseteil (von 11)
13 - Fußteil (von 11)
14 - Abdeckung
15 - Frischwasserbehälter
16 - Steigrohr
17 - Verschluß
18 - Öffnung ( in 15)
19 - Unterteil (von 15)

20 - I. Dickschichtheizer
21 - Einlaß (von 16)
22 - Auslaß (von 16)
23 - Ziehbehälter
24 - Deckel (von 23)
25 - Durchlaß (in 25)
26 - Aufnahmebehälter für Tee
27 - Verschluß- und Öffnungseinrichtung
28 - Auslaß (in 26)
29 - Auffangbehälter
30 - Handgriff (von 29)
31 - Verschlußdeckel (von 29)
32 - Durchlaß (in 31)
33 - Warmhalteplatte
34 - II. Dickschichtheizer
35 - Silikonring
36 - Uhr
37 - Kontroll-Leuchten
38 - Schalter
39 - Boden
40 - Skala (für Tassenanzahl)
41 - Tragkörper
42 - Dickschichtleiterbahn (auf 41) )   Fig. 2
43 - Dickschichtleiterbahn (auf 41) )   Fig. 2
44 - Dickschichtleiterbahn (auf 41) )   Fig. 2
45 - Dickschichtleiterbahn (auf 41) )   Fig. 2
46 - Dickschichtleiterbahn (auf 41) )   Fig. 3
47 - Dickschichtleiterbahn (auf 41) )   Fig. 3
48 - Dickschichtleiterbahn (auf 41) )   Fig. 3
49 - Dickschichtleiterbahn (auf 41) )   Fig. 4
50 - Dickschichtleiterbahn (auf 41) )   Fig. 4
51 - Anschlußleitung
42 - Halteflansch
43 - Spalt

### Ansprüche

1. Elektrisch betriebenes Gerät zur Herstellung von Tee mit einem Frischwasserbehälter, der im Bereich seines Bodens eine elektrische Heizeinrichtung aufweist und bis auf eine verschließbare Einfüllöffnung für das Wasser allseitig geschlossen ist und im Inneren ein Steigrohr aufweist, dessen Einlaß in Nähe des Bodens und dessen Auslaß in einem Ziehbehälter liegt, der einen Aufnahmebehälter für den Tee und eine einstellbare Verschluß- und Öffnungseinrichtung für den fertig zubereiteten Tee aufweist, wobei unterhalb des Ziehbehälters ein Auffangbehälter angeordnet ist, der auf einer beheizbaren Warmhalteplatte ruht,
**dadurch gekennzeichnet,**
daß die elektrisch betriebene Heizung des Frischwasserbehälters (15) als Dickschichtheizer (20) ausgebildet ist, der im unteren Bereich des Frischwasserbehälters (15) liegt und einen Tragkörper (41) aus isolieren dem Werkstoff umfaßt, auf dessen Außenseite Dickschichtleiterbahnen (42. 43. 44. 45) angeordnet sind.

2. Gerät nach Anspruch 1, dadurch gekennzeichnet, daß der Dickschichtheizer (20) als plattenförmiger Tragköper (41) aus einem elektrisch isolierenden Werkstoff, wie Keramik, Kunststoff od.dgl. ausgebildet ist, der an der Außenseite des Bodens des Frischwasserbehälters (15) liegt und auf dessen Außenseite pastenförmige Dickschichtleiterbahnen (42 bis 50) aufgebracht sind.

3. Gerät nach Anspruch 1 und 2, dadurch gekennzeichnet, daß der Dickschichtheizer (20) an der Außenseite des metallischen Unterteiles (19) des Frischwasserbehälters (15) befestigt ist, während der Oberteil des Frischwasserbehälters (15) aus einem durchsichtigen Werkstoff gefertigt ist und wenigstens auf seiner einen Wandung eine Skala (40) aufweist.

4. Gerät nach Anspruch 3. dadurch gekennzeichnet, daß Oberteil und Unterteil (19) des Frischwasserbehälters (15) unter Zwischenschaltung einer Dichtung miteinander verbunden sind und daß der Frischwasserbehälter auf einem Halteflansch (52) des Gerätegehäuses (11) lagert.

5. Gerät nach Anspruch 1, dadurch gekennzeichnet, daß der Frischwasserbehälter (15) aus einem elektrisch isolierenden Werkstoff hergestellt ist und daß die Dickschichtleiterbahnen unmittelbar auf einer der Wandungen eines solchen Frischwasserbehälters (15) angebracht sind.

6. Gerät nach einem oder mehreren der vorangehenden Ansprüche, dadurch gekennzeichnet, daß auf einem Tragkörper (41) aus einem elektrisch isolierenden Werkstoff eine Mehrzahl von Dickschichtleiterbahnen (42-45 bzw. 46-48) aufgebracht sind, die einzeln oder gruppenweise benutzbar sind (Fig. 2 und 3).

7. Gerät nach Anspruch 6, dadurch gekennzeichnet, daß die Dickschichtleiterbahnen (42-45 bzw. 46-48) unterschiedlich breit gehalten sind bzw. unterschiedliche Widerstandswerte aufweisen, wobei der Widerstandswert umgekehrt proportional zur Breite der Widerstandsbahn ist.

8. Gerät nach Anspruch 1, dadurch gekennzeichnet, daß die wirksame Länge des Steigrohres (16) im Frischwasserbehälter (15) derart veränderbar ist, daß der Einlaß (21) des Steigrohres (16) unterschiedliche Abstände zum Boden (39) des Frischwasserbehälters (15) einnimmt.

9. Gerät nach Anspruch 8, gekennzeichnet durch die Ausbildung des Steigrohres (16) als Teleskoprohr.

FIG.1

42  43  44  45

41

53

# FIG.2

46  47  48

41

# FIG.3

49  50  41

51

# FIG.4